# FASCICULE DE BREVET EUROPEEN

(11) **EP 0 375 546 B1**
(45) Date de publication et mention de la délivrance du brevet: **10.11.1993**
(21) Numéro de dépôt: 89403570.8
(22) Date de dépôt: 20.12.1989
(51) Int. Cl.: G06F 1/00, H03M 11/00

(54) **Procédé de brouillage de l'identification d'une touche d'un clavier non codé, et circuit pour la mise en oeuvre du procédé**
Verfahren zur Störung der Tastenerkennung einer unkodierten Tastatur und Schaltung zur Ausführung des Verfahrens
Method for distorting the key identification of an uncoded keyboard, and circuit for carrying out this method

(30) Priorité: 20.12.1988 FR 8816786
(43) Date de publication de la demande: 27.06.1990
(73) Titulaire: BULL S.A., 92800 Puteaux (FR)
(72) Inventeur: Fink, Hartmut, F-78860 St Nom La Breteche (FR); Verrier, Philippe, F-78560 Le Port Marly (FR); Poulenard, Roger, F-78230 Le Pecq (FR)
(74) Mandataire: Debay, Yves

(56) Documents cités:
- EP-A- 0 168 861
- WO-A-84/04614
- GB-A- 2 190 775
- IBM TECHNICAL DISCLOSURE BULLETIN, vol. 25, no. 11A, avril 1983, pages 5777-5778, New York, US; P. JEANNIOT et al.: "Low-cost keyboard scanner"

## Description

La présente invention concerne un procédé de brouillage de l'identification d'une touche d'un clavier non codé et le circuit de mise en oeuvre du procédé.

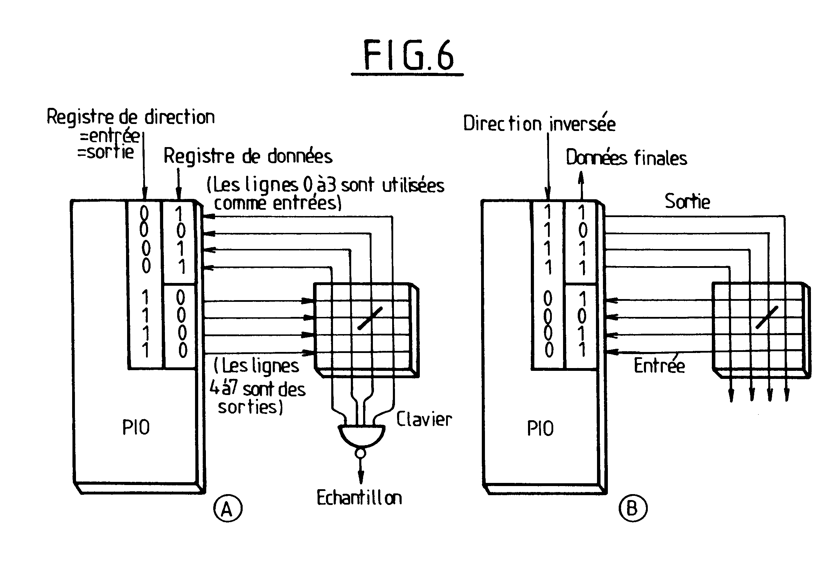

Il est connu un procédé d'identification des touches appuyées d'un clavier matriciel non codé dit à inversion de ligne. Dans ce procédé, on utilise un interface d'entrée-sortie parallèle universel dans lequel, comme représenté figure 6, un port de huit bits est affecté à l'interfaçage du clavier par programmation individuelle en entrée ou en sortie des lignes du port. L'identification de touches se déroule en deux étapes.

Dans la première étape A, quatre lignes du port universel reliées aux rangées sont programmées en sortie. Les quatres colonnes sont programmées en entrée. La valeur "0000" est alors envoyée en sortie sur le port. Il en résulte la valeur "10 11" en entrée. On utilise cette fois les vraies polarités et le 0 correspond à la position de colonne où une touche a été enfoncée, mettant ainsi à la masse la colonne correspondante.

Dans la seconde étape B, les entrées et les sorties sont inversées. Cette inversion peut être aisément effectuée sur un circuit d'interfaces parallèles en changeant les bits du registre de direction des données. La valeur initiale du registre de direction des données était de "00001111" et elle est devenue "11110000". Cette opération peut s'effectuer par l'intermédiaire d'une seule instruction demandant de complémenter le contenu du registre de direction de données. Le registre de données, lui ne subit aucune modification.

On lit alors la valeur finale du contenu de registre de données, comme on peut le constater sur la figure 6 l'entrée sur les colonnes devient "1011". La valeur "0" correspond à la colonne sur laquelle une touche a été enfoncée. La valeur complète du registre des données est "1011 1011", ou chaque 0 indique une fermeture de contact permettant d'identifier à présent la rangée et la colonne. Le microprocesseur utilise ce code de huit bits comme vecteur de branchement à une table mémorisée dans une ROM qui contient le code de huit bits correspondant à la touche du clavier.

La méthode que l'on vient de décrire, présente l'inconvénient de permettre facilement l'identification de la touche en foncée pour un fraudeur qui viendrait se brancher entre les fils reliant le clavier et l'interface. Ceci est d'autant plus génant lorsque l'on a pris par ailleurs des mesures permettant de protéger les informations contenues dans le terminal ou le dispositif auquel est relié le clavier.

Un premier but de l'invention est donc de proposer un procédé de l'identification d'une touche d'un clavier non codé qui ne permette pas d'avoir la connaissance de la touche enfoncée.

Dans l'art antérieur , GB-A-2 190 775 décrit un système dans lequel le processeur reçoit des signaux de l'enfoncement des touches d'un clavier via des lignes spécifiques pendant des périodes prédéterminées. Entre deux périodes, le processeur active ces lignes pour simuler l'enfoncement de touches du clavier, afin qu'un fraudeur ne puisse pas distinguer entre les signaux représentant l'enfoncemen réel d'une touche et ceux simulés par le processeur.

Ce but est atteint par le fait que le procédé de brouillage de l'identification d'une touche d'un clavier non codé, par la technique du balayage, est caractérisé en ce qu'il consiste :
a) à relier en sortie toutes les rangées et les colonnes du clavier aux sorties d'un premier registre d'un interface d'entrée-sortie parallèle par l'intermédiaire, pour chaque sortie du registre, d'un inverseur dont la sortie est reliée, d'une part, à travers une résistance à la tension de l'alimentation, et d'autre part, aux entrées de poids correspondant d'un deuxième registre de l'interface positionné en entrée ;
b) à relier aux entrées du deuxième registre de l'interface d'entrée-sortie parallèle toutes les rangées et les colonnes du clavier ;
c) à tirer, de façon aléatoire, l'ordre dans lequel les sorties vont être balayées ;
d) à placer au moins une des sorties à 1 et à regarder si l'une des entrées correpondante est à 1 ;
e) dans le cas contraire, à balayer une par une chacune des lignes restantes en la plaçant à 1 jusqu'à ce que l'entrée associée se trouve à la valeur 1 indiquant que la ligne ou la colonne a été trouvée ;
f) à réitérer les étapes d) et e) pour déterminer la colonne, ou respectivement, la ligne.

Selon une caractéristique supplémentaire, l'étape d) consiste à placer deux sorties du registre de sortie (160) de l'interface (16) et à regarder si l'une des entrées correspondantes du registre d'entrée est à 1.

Selon une autre caractéristique, le procédé est utilisé pour protéger l'information constituée par un numéro de code introduit par le clavier (82) dans un terminal de lecture d'une carte bancaire.

Un autre but de l'invention est de proposer un circuit permettant la mise en oeuvre du procédé.

Ce but est atteint par le fait que ce circuit comporte un interface d'entrée-sortie parallèle à deux registres comportant chacun autant de bits que le clavier matriciel a de lignes et de colonnes, dont le premier registre est positionné en sortie avec chacune de ses sorties reliées à un inverseur dont la sortie est reliée, d'une part à travers une résistance à la tension de l'alimentation, d'autre part, aux entrées de poids correspondant du deuxième registre de l'interface d'entrée-sortie positionné en entrée, les lignes et les colonnes de la matrice du clavier, étant reliées chacune aux entrées du deuxième registre, le circuit d'interface d'entrée-sortie parallèle étant relié au bus d'un microprocesseur sur lequel est connectée une mémoire contenant le programme de mise en oeuvre du procédé de brouillage de l'identification de la touche appuyée.

Un dernier but de l'invention est de proposer une utilisation du procédé du circuit pour augmenter la sécurité d'un terminal recevant des informations provenant, soit d'une carte à microcircuit, soit d'un clavier.

Ce but est atteint par le fait que le procédé et le circuit sont utilisés pour protéger l'information constituée par un numéro de plusieurs chiffres introduit par le clavier dans le terminal de lecture d'une carte à microcircuit, le terminal de lecture comportant des moyens de protection physique des circuits électroniques et de l'information contenue par ces circuits électroniques.

D'autres caractéristiques et avantages de la présente invention apparaîtront plus clairement à la lecture de la description ci-après, faite en référence aux dessins annexés, dans lesquels :
- la figure 1 représente une vue du schéma de principe du circuit d'identification de la touche appuyée d'un clavier non codé permettant la mise en oeuvre du procédé de l'invention ;
- la figure 2 représente les étapes du procédé d'identification de la touche selon l'invention ;
- la figure 3 représente une vue schématique en coupe d'un dispositif de protection physique pour une carte électronique d'un terminal ;
- la figure 4 représente le schéma des éléments fonctionnels ;
- la figure 5 représente le schéma électronique du dispositif de protection du circuit électronique à mémoire volatile du terminal ;
- la figure 6 représente le circuit électronique d'identification d'une touche appuyée pour clavier non codé selon l'art antérieur.

Une interface d'entrée-sortie (16) est reliée par un bus (110) à un microprocesseur (11) et une mémoire (13) contenant, entre autre, le programme de gestion de l'interface d'entrée-sortie (16), et permettant la mise en oeuvre du procédé de l'invention. L'interface d'entrée-sortie (16) comporte un premier registre de données (160) contenant un octet de données et son registre de direction associé (161) qui permet de positionner ce registre de données, soit en entrée, soit en sortie. Pour les besoins de l'invention, le registre (160) est positionné en sortie. Un deuxième registre de données (162) recevant un octet de données en entrée, est également associé avec son registre de direction (163) qui le positionne en entrée pour les besoins du fonctionnement de l'invention. Les données reçues en entrée par le registre (162) sont ensuite transmises au bus (110) pour traitement par le processeur (11) en fonction du programme (130 à 157) contenu dans la mémoire (13). De même, le processeur (11), à l'aide du programme, fournit par l'intermédiaire du bus (110), les données à transmettre en sortie par le registre (160). A chaque bit de l'octet du registre de données en sortie (160) est associée une sortie PAi sur laquelle est branché un inverseur. L'ensemble des huit inverseurs associés à l'octet est représenté par la référence (164). Chaque sortie d'inverseur est reliée, d'une part, par une résistance à une tension d'alimentation, et d'autre part, à l'entrée PBj de poids correspondant du registre d'entrée (162). L'ensemble des huit résistances associées aux inverseurs sont représentées par la référence (166).

Les quatre lignes de poids les plus élevées sont reliées aux quatre lignes d'entrée d'un clavier non codé, tandis que les quatre lignes de poids les plus faibles du registre d'entrée (162) sont reliées aux quatres colonnes du clavier (82). Il est bien évident que dans l'exposé de l'invention nous avons choisi un clavier non codé (82) comportant seize touches, et par conséquent ayant quatre lignes et quatre colonnes, mais ceci n'est nullement limitatif et l'invention peut s'appliquer quel que soit la dimension des claviers. Il suffira pour cela de trouver soit un interface avec des registres de tailles suffisantes, soit d'associer plusieurs circuits d'interface en parallèle. L'ensemble des circuits d'interface (16) et de traitement des signaux (11 et 13) sont noyés dans une résine, comme on le verra ultérieurement, de façon à les protéger contre des accès frauduleux. Le seul point d'accès possible pour un fraudeur est le connecteur (83) qui assure la liaison entre l'interface monté dans un terminal et le clavier relié par un fil souple au connecteur.

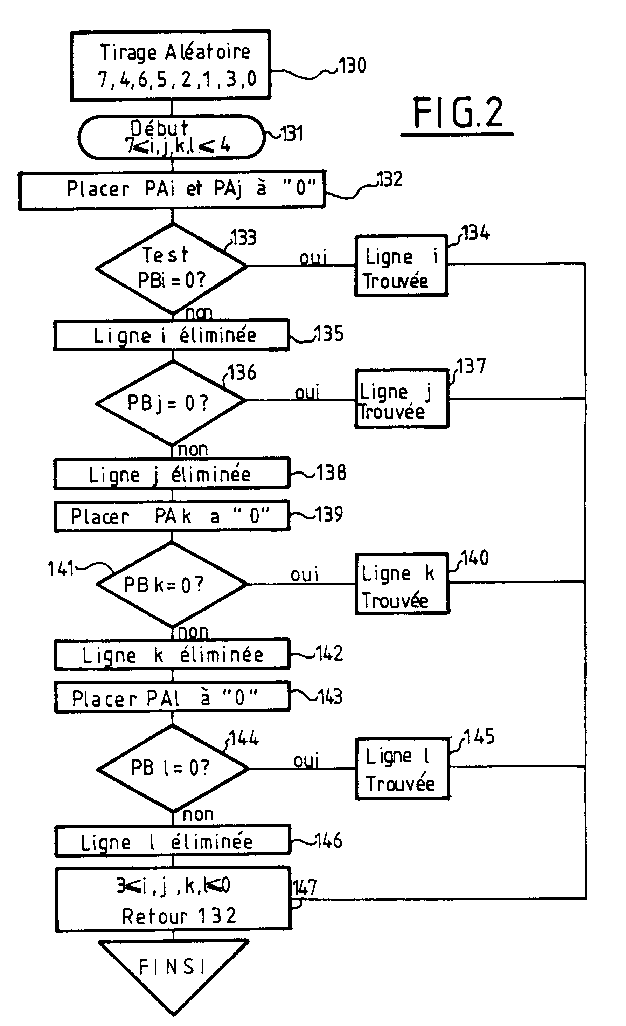

Le fonctionnement du dispositif va être explicité en se référant à l'organigramme de la figure 2. Un tirage aléatoire (130) d'abord sur les numéros correspondants aux colonnes puis sur ceux correspondants aux lignes, permet d'obtenir l'ordre de balayage des sorties du registre (160), qui dans cet exemple, sera par exemple "7, 4, 6, 5, 2, 1, 3, 0". Après avoir effectué ce tirage aléatoire, le balayage commence par exemple par les lignes de la matrice et pour se faire, l'étape (132) place les sorties PAi et PAj avec i et j compris entre 4 et 7 à la valeur "0". Dans le cas du tirage aléatoire, les premières sorties seront PA7, PA4 à la valeur "0". Les autres sorties du registre (160) étant à la valeur "1". Ainsi, le mot dans le registre (160) sera "0110111", ce qui correspond au code hexadécimal "6F". A la sortie des inverseurs (164), on aura donc un "1" sur la ligne 7 et la ligne 4, et partout ailleurs des "0". Ensuite, à l'étape suivante (133), le bit d'entrée du registre d'entrée (162) correspondant à l'une des deux lignes de sortie que l'on a placé à "0" est testé. Si ce bit d'entrée est bien à "0" au cours de l'étape (134) le logiciel mémorise que la ligne i a été trouvée. Dans le cas contraire, l'étape (135), le logiciel élimine la ligne i, puis à l'étape (136) teste le bit correspondant au poids de la ligne j pour déterminer si sa valeur est "0 ou 1". Dans le cas où la valeur est "0", le logiciel mémorise à l'étape (137) que la ligne est trouvée et que son numéro est j. Dans le cas où la valeur est "1", le logiciel à l'étape (138) élimine ce numéro j comme numéro de ligne, puis passe à l'étape (139).

A l'étape (139), on place une autre ligne du registre de sortie à "0" et toutes les autres à la valeur "1" ce qui, dans le cas de la séquence aléatoire indiquée plus haut, nous amène à mettre la ligne 6 à "0". Le mot du registre de sortie (160) est donc "10111111", ce qui en hexadécimal représente le code hexadécimal "BF". Ensuite, à l'étape (141), la ligne d'entrée du registre d'entrée (162) ayant le poids correspondant à la ligne de sortie, en l'occurence PB6, est testée, et si sa valeur est "0", la ligne du clavier dans laquelle la touche a été enfoncée est celle correspondant à la sortie du registre (160) mis à "0". A l'étape (140), le système mémorise que la ligne 2 est à "0" dans le cas où on a enfoncé la touche 7. Dans le cas où ce n'est pas la touche 7, la ligne PB6 n'est pas à "0" et, par conséquent, à l'étape (142) le numéro de la ligne est éliminé comme solution possible et la dernière sortie correspondant à une ligne, en l'occurence la sortie PA5 est placée à "0" à l'étape (143). A l'étape (144), la ligne d'entrée du registre d'entrée correspondant au poids du bit mis à "0" est testée, et en fonction du résultat, on détermine si la ligne est trouvée ou non. Dès que l'on a trouvé la ligne à l'une des étapes (134, 137, 140 ou 145), on fait un saut à l'étape (147) qui nous renvoie au début de l'organigramme à l'étape (132) après avoir imposé aux indices i, j, k, l de rester compris entre les valeurs "0 et 3", ceci de façon à balayer les colonnes. On reprend l'organigramme pour les valeurs i, j, k, l comprises entre 0 et 3 de manière à balayer les colonnes, et ainsi à l'étape (132), on va positionner, compte tenu du tirage aléatoire effectué, PA2 et PA1 à "0". Ceci nous donne donc le registre de sortie "11111001", ce qui en hexadécimal donne la valeur "F9".

A l'étape (139), on va positionner PA3 à "0", ce qui donne au registre de sortie la valeur "11110111", ce qui en hexadécimal correspond à "F7".

A l'étape (143), on va donner à PA0 la valeur "0", ce qui donne au registre de sortie la valeur "11111110", ce qui en hexadécimal correspond à la valeur "FE". Dans le cas où on suppose que la touche 7 a été enfoncée, le logiciel va déterminer à l'étape (137) qu'il a trouvé la colonne correspondant à l'entrée PB1. Par conséquent, connaissant PB6 et PB1, il sera en mesure de déterminer que la touche 7 est enfoncée. Dans le cas de la touche 7, les étapes suivantes de l'étape (136) ne seront pas exécutées, et on saute directement à l'étape (147) pour la détermination de la colonne. Dans le cas de la détermination de la ligne, on passe de l'étape (140) à l'étape (147). Après cette étape, soit on reboucle sur l'entrée (132) du programme, soit le programme est arrêté si les deux valeurs ont été trouvées.

Un fraudeur qui se branche sur le connecteur (83) obtient les informations suivantes. Lors du balayage des lignes, à la première étape il voit les lignes 1 et 4 de la matrice correspondant aux entrées PB7 et PB4 à "1", ce qui lui donne éventuellement l'information que ce ne sont pas ces lignes. Ensuite, à l'étape suivante, il voit que la ligne 2 correspondant à l'entrée PB6 est à "0" comme toutes les autres, ce qui dans ce cas-là ne lui donne aucune information. Le système qui a déterminé que la ligne était la deuxième ligne, passe ensuite directement au balayage des colonnes. Il commence, compte tenu du tirage aléatoire, à balayer les colonnes 3 et 2 correspondant respectivement aux entrées PB2, PB1. Dans ce cas là, le fraudeur va lire le mot d'entrée "00000100" puisque la valeur "0" qui se trouve sur la ligne PA6 en sortie de l'inverseur sera transmise par la matrice du clavier et la touche 7 enfoncée à l'entrée PB1, et c'est cette valeur qui prendra le dessus sur la valeur PA1. Par conséquent, le fraudeur peut seulement en déduire que la colonne 3 n'est pas concernée. Par contre, le système lui a déterminé qu'il s'agissait de la touche 7. A ce stade, il reste donc au fraudeur une indétermination sur les touches 5, 7, 8, 9, 11 et 12, indétermination qui ne lui permet pas de connaître la touche. Comme le code d'une carte bancaire est constitué de quatre chiffres, l'indétermination que l'on trouve au niveau d'une touche se retrouve de façon encore plus complexe au niveau des quatre chiffres.

Si on calcule la valeur PF(n) représentant la probabilité qu'il faille au programme associé au microprocesseur (n) étapes ou coups pour trouver la touche, on s'aperçoit que dans le cas de la méthode exposée ci-dessus balayant en ligne ou en colonne au premier coup deux lignes ou deux colonnes on obtient les valeurs ci-après : PF(1) = 0, PF(2) = PF(3) = 4/16, PF(4) = 5/16, PF(5) = 2/16, PF(6) = 1/16. Par conséquent, la probabilité de trouver la touche au bout de deux coups, trois ou quatre est la plus importante. Même si l'on trouve au bout de quatre coups, ceci laisse une indétermination sur au moins trois touches pour cette touche considérée. Comme pour les autres touches du code, on peut trouver en deux ou trois coups, l'indétermination sur le code reste suffisamment grande pour empêcher un fraudeur de déterminer le code.

Le fait de placer plus de une sortie du registre à la valeur "1" est intéressant à deux points de vue. Premièrement, cela améliore les probabilités, et deuxièmement cela augmente la difficulté pour le fraudeur puisqu' il se trouve tantôt avec deux "1", tantôt avec un seul "1", ou même des fois avec aucun "1", selon que le balayage a été fait avec un "1" ou avec deux "1". En effet, si on compare les probabilités ci-dessus avec celles de trouver la touche en appliquant la même méthode mais en effectuant qu'un balayage d'une sortie à la fois, on obtient les probabilités suivantes : PF(1) = 0, PF(2) = probabilité de trouver au premier coup la ligne multiplié par la probabiité de trouver au premier coup la colonne = 1/4 x 1/4 = 1/16, PF3 = 2/16, PF4 = 3/16, PF5 = 4/16, PF6 = 3/16, PF7 = 2/16, PF8 = 1/16. On constate donc que si l'on veut avoir une probabilité importante, il faut consacrer entre quatre et six coups, ce qui diminue d'autant l'indétermination pour le fraudeur.

Il est bien évident que la méthode n'est pas limitée aux balayages qui commencent par les lignes. On peut tout aussi bien commencer à balayer les colonnes en modifiant en conséquence le tirage aléatoire.

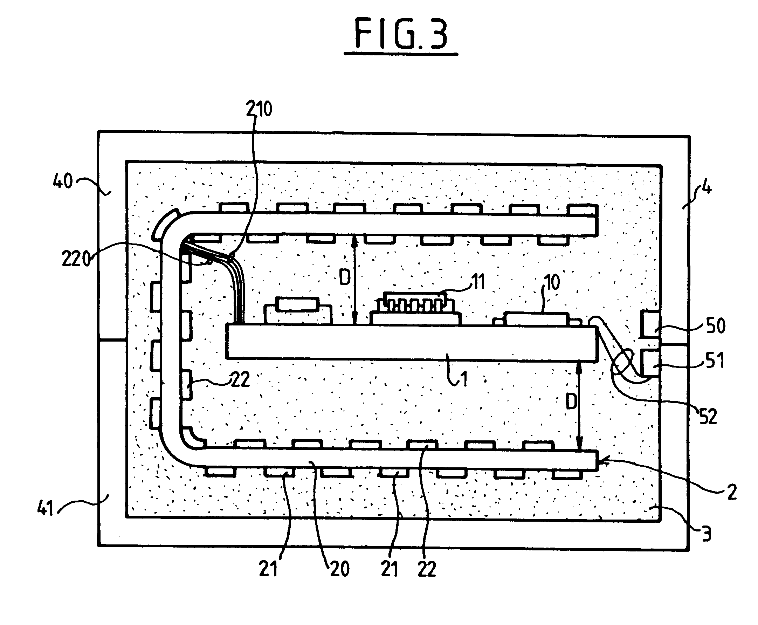

Ce type de protection est particulièrement utile dans le cas où le clavier est utilisé avec un terminal protégé selon le mode de réalisation des figures 3 à 5 que nous allons exposer ci-après.

Une carte (1) comportant un ensemble de circuits électroniques (10, 11) est entourée d'un réseau résistif (2) constitué par un film en polycarbonate (20) sur chacune des faces duquel un film de carbone (21, 22) est sérigraphié. Comme on peut le remarquer à la figure 3, les pistes de carbone (22) sur une face du film (20) en polycarbonate sont décalées par rapport aux pistes (21) de l'autre face du film support (20).

L'ensemble de ces réseaux de film de carbone (22) et (21) disposé sur chacune des faces constituent respectivement une résistance (R1) et une deuxième résistance (R2) qui sont reliées au circuit électronique de la carte (1) par une liaison (220) et respectivement une liaison (210). L'ensemble carte électronique (1) et réseau de résistance (2) est noyé dans de la résine en polyuréthanne. Cette résine reste à l'état solide jusqu 'à une température d'environ 100°C. La distance D entre les faces du réseau de résistance et le circuit imprimé constituant la carte électronique est suffisamment réduite pour éviter qu'une sonde d'appareil de mesure puisse être glissée entre le réseau de résistance (2) et la carte de circuit électronique (1) par les faces où la carte n'est pas entourée, puisque le réseau de résistance (2) a une section transversale en forme de U.

Dans une forme de réalisation améliorée, on pourrait envisager d'entourer la carte de quatre réseaux de résistance disposés de façon à ce qu'aucun intervalle ouvert ne permette l'accès à la carte électronique (1).

Le bloc de résine (3) est ensuite enfermé dans un boîtier (4) constitué de deux demi coquilles (40, 41) dont une première comporte à proximité de la surface de séparation un aimant (50), et la seconde (41) comporte de façon adjacente à la surface de séparation, un interrupteur à lame souple (51) qui est relié par les fils (52) au circuit électronique de la carte (1).

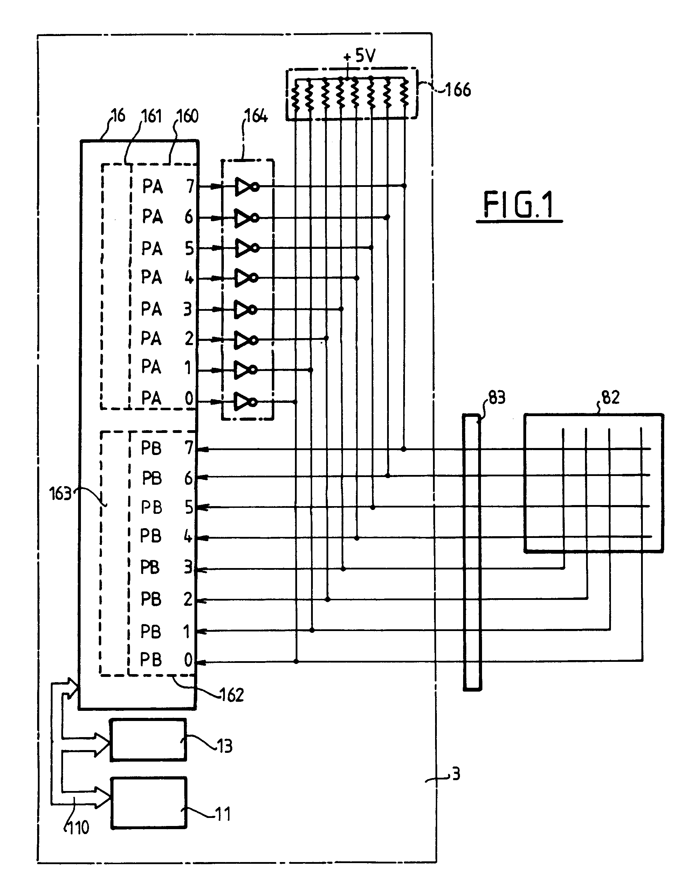

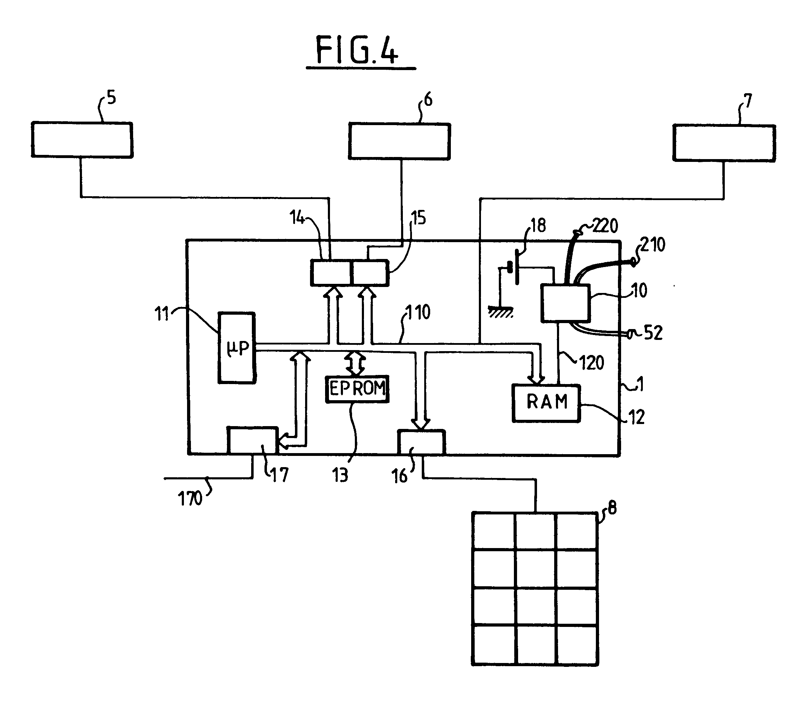

La figure 4 représente une application intéressante du principe de l'invention selon la figure 1, notamment pour protéger un terminal lecteur de cartes de crédit. Ce terminal lecteur de cartes de crédit représenté à la figure 4 comporte un lecteur de piste magnétique (6) relié par un circuit d'interface (15) à un bus (110) auquel est connecté un microprocesseur (11). Un deuxième lecteur (5) est adapté pour la lecture de cartes de crédit, comportant en plus de la piste magnétique, un circuit intégré à un microprocesseur autoprogrammable. Ce lecteur (5) est relié par une deuxième interface (14) au bus (110). Un dispositif d'affichage (7) constitué, par exemple, de diodes électroluminescentes est également relié au bus (110). Une mémoire vive volatile (12) est reliée également au bus (110). Cette mémoire vive (12) (RAM) est transformée en mémoire non volatile par une batterie (18) ou une pile au lithium qui permet d'assurer l'alimentation de la mémoire volatile même en cas de coupure d'une alimentation principale ou auxiliaire. Cette alimentation (18) de la mémoire vive est transmise par un circuit élecronique (10) de détection des tentatives de fraude ; ce circuit électronique (10) est relié par les fils (220, 210 et 52) aux résistances de la figure 3 et à l'interrupteur à lames souple (51). De même, un clavier (8) est connecté, par l'intermédiaire d'un circuit d'interface (16), au bus (110). Enfin, une mémoire morte programmable, du type EPROM, est connectée au bus (110). Le terminal comporte également un circuit d'interface (17) permettant de réaliser une liaison du type (RS232) ou un réseau local.

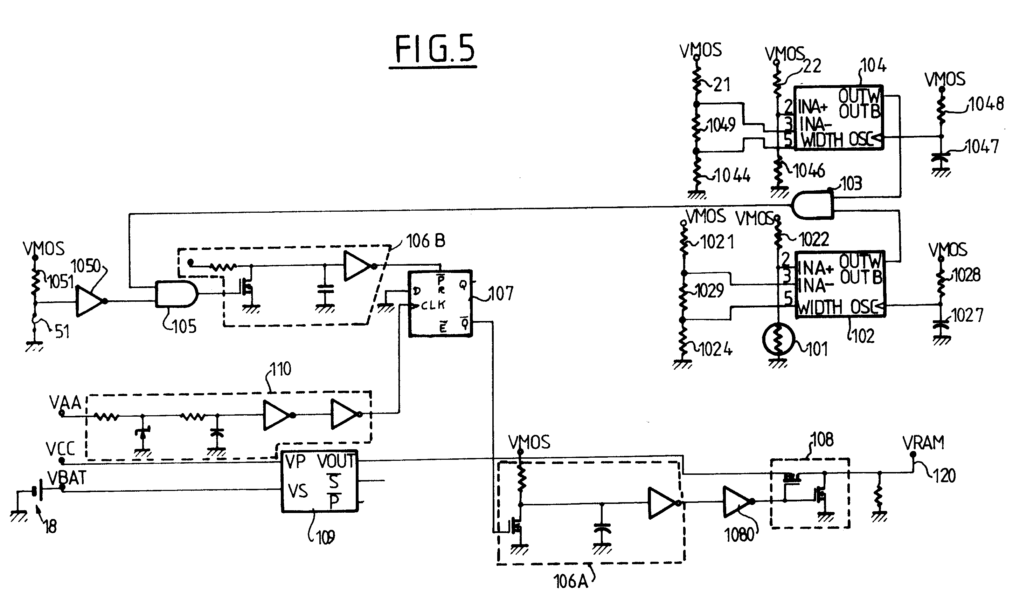

Le circuit électronique (10) de protection de la carte (1) contre la fraude est représenté à la figure 5. Cette électronique comporte une thermistance (101) montée dans un pont constitué par les résistances (1022, 1021, 1024 et 1029). Le pont est branché à l'entrée d'un comparateur à fenêtre (102) qui reçoit sur son entrée d'horloge (OSC) le signal fourni par un générateur d'impulsion constitué par le point commun d'une résistance (1028) et d'un condensateur (1022) reliés en série entre la masse et une tension d'alimentation. La sortie du comparateur (102) est envoyée sur une première entrée d'une porte ET(103). La deuxième entrée de cette porte ET(103) reçoit la sortie d'un deuxième comparateur (104) à fenêtre, recevant sur son entrée impulsionnelle le signal délivré par le point commun à une résistance (1048) et un condensateur (1047) branchés en série entre la tension d'alimentation et la masse. Ce comparateur (104) est branché à un pont de résistance constitué, d'une part par les résistances (21, 22) du réseau entourant le circuit, et d'autre part par les résistances (1046, 1044 et 1049). La sortie de la porte ET(103) est envoyée sur une première entrée d'une deuxième porte ET(105) dont une deuxième entrée reçoit la sortie d'un inverseur (1050). Cet inverseur (1050) a son entrée reliée au point commun entre une résistance (1051) et l'interrupteur à lame souple (51) branchés en série entre la tension d'alimentation et la masse. La sortie de la porte ET(105) est envoyée à travers un filtre (106B) vers une bascule (107) dont l'entrée d'horloge (CLK) reçoit la sortie d'un oscillateur (110). La sortie /Q de la bascule (107) est envoyée sur un deuxième filtre (106A) dont la sortie est reliée à un inverseur (1080). La sortie de cet inverseur commande un circuit interrupteur électronique (108) permettant de couper la sortie (120) qui alimente les mémoires volatiles (12) de la carte (1). L'alimentation pour ces mémoires est fournie par un circuit (109) de commutation d'alimentation permettant de commuter automatiquement l'alimentation du terminal sur une alimentation fournie par la pile lithium (18) branchée sur l'entrée (VS) du circuit (109).

En fonctionnement, la thermistance (101) associée avec le comparateur (102) permet de détecter le dépassement des deux seuils de température de - 30°C et + 100°C. Celui de - 30°C permet d'éviter qu'en abaissant la température du circuit électronique, on puisse débrancher la batterie sans perdre l'information contenue dans les mémoires vives (12). Ceci permettrait à un fraudeur d'accèder aux informations contenues par ces mémoires vives (12) et constituées par les clés des clients ayant utilisé leurs cartes. De même, le seuil de + 100°C permet de détecter une tentative de faire fondre la résine (3) en vue d'accéder aux informations contenues dans la mémoire vive. Dans les deux cas où l'un de ces seuils de température est franchi, le circuit interrompt l'alimentation de la mémoire vive (RAM) et provoque de cette façon la destruction des informations contenues dans celle-ci.

De même, une tentative de perçage du réseau de résistance (21, 22) est décelée par la variation correspondante des résistances (21, 22) détectée par le comparateur (104) dont la sortie commande l'interruption de l'alimentation de la mémoire (12). Ceci permet d'éviter le percement d'un canal pour introduire une sonde de mesures, et ensuite, prélever les informations contenues dans la mémoire. Enfin, l'ouverture du boîtier du terminal étant détectée par l'interrupteur à lame souple (51) dont le contact se ferme dès que l'aimant (50) est éloigné de cet interrupteur. Cet état de fait est détecté par l'inverseur (1050) et transmis par la porte ET(105) à la bascule (107) dont la sortie commande l'interruption de l'alimentation de la mémoire vive (12). La bascule (107) permet de mémoriser l'un des trois états de détection dès que l'une de ces trois conditions, ou les deux ou trois conditions, apparaissent en même temps.

De cette façon, on a réalisé un dispositif de protection pour terminal qui permet d'éviter les tentatives de fraudes soit au niveau du clavier, soit au niveau du terminal.

## Revendications

1. Procédé de brouillage de l'identification de la touche d'un clavier (82) non codé par la technique du balayage, caractérisé en ce qu'il consiste :
a) à relier en sortie toutes les rangées et les colonnes du clavier aux sorties d'un premier registre (160) d'un interface (16) d'entrée-sortie parallèle par l'intermédiaire, pour chaque sortie du registre d'un inverseur (164) dont la sortie est reliée, d'une part à travers une résistance (166) à une tension d'alimentation, et d'autre part, aux entrées de poids correspondant d'un deuxième registre (162) de l'interface positionné en entrée ;
b) à relier aux entrées du deuxième registre (162) de l'interface d'entrée-sortie toutes les rangées et les colonnes du clavier;
c) à tirer, de façon aléatoire, l'ordre dans lequel les sorties vont être balayées ;
d) à placer au moins une des sorties à "1" et à regarder si l'une des entrées correspondantes est à "1" ;
e) dans le cas contraire, à balayer une par une chacune des lignes restantes en la plaçant à "1" jusqu'à ce que l'entrée associée se trouve à la valeur "1" indiquant que la ligne ou la colonne a été trouvée ;
f) à réitérer les étapes d) et e) pour déterminer la colonne ou respectivement la ligne correspondant à la touche du clavier enfoncée.

2. Procédé selon la revendication 1, caractérisé en ce que l'étape d) consiste à placer deux sorties du premier registre (160) de l'interface (16) et à regarder si l'une des entrées correspondantes du deuxiéme registre (162) est à "1".

3. Procédé de brouillage selon une des revendications précédentes, caractérisé en ce qu'il est utilisé pour protéger l'information constituée par un numéro de code introduit par le clavier (82) dans un terminal de lecture d'une carte bancaire.

4. Circuit (3) pour la mise en oeuvre du procédé selon une des revendications précédentes, caractérisé en ce qu'il comporte un circuit d'interface (16) d'entrée-sortie parallèle à deux registres comportant chacun autant de bits que le clavier a de colonnes et de lignes, dont le premier registre (160) est positionné en sortie avec chacune de ses sorties reliée à un inverseur (164) dont la sortie est reliée, d'une part à travers une résistance (166) à une tension d'alimentation, et d'autre part aux entrées de poids correspondant du deuxième registre (162) de l'interface d'entrée-sortie positionné en entrée, toutes les rangées et les colonnes du clavier (82) étant chacune reliée à une entrée du deuxième registre et une sortie du premier registre, un microprocesseur (11) relié par un bus (110) au circuit d'interface (16) et une mémoire (13) contenant le programme de gestion et de commande de l'interface (16) par le processeur (11).

5. Circuit selon la revendication 4, caractérisé en ce qu'il est utilisé pour protéger l'information constituée par un numéro de plusieurs chiffres introduit par le clavier dans le terminal de lecture d'une carte à microcircuits, le terminal de lecture comportant des moyens de protection physique des circuits électroniques et de l'information contenue par ces circuits électroniques.

6. Circuit selon la revendication 5, caractérisé en ce que les moyens de protection physique sont constitués d'un réseau résistif (21, 22) noyé dans une résine (3) et comportent en outre des moyens (104) de détection des modifications de la résistance du réseau et des moyens (101, 102) de détection des variations de la température de la résine.

## Claims

1. A process for scrambling the identity of the key on a non-coded keyboard (82) by the scanning technique, characterised in that it consists of:
a) connecting as an output all the rows and columns of the keyboard to the outputs of a first register (160) of a parallel input/output interface (16) through the intermediary, for each output of the register, of an inverter (164), the output of which is connected on the one hand through a resistor (166) to a supply voltage and, on the other hand, to the inputs with significance corresponding to a second register (162) of the interface positioned as an input;
b) connecting to the inputs of the second register (162) of the input/output interface all the rows and columns of the keyboard;
c) selecting at random the order in which the outputs will be scanned;
d) setting at least one of the outputs to "1" and seeing whether one of the corresponding inputs is at "1";
e) if this is not the case, scanning one by one each of the remaining lines by setting each one to "1" until the associated input is at the value "1" indicating that the line or the column has been found;
f) repeating stages d) and e) to determine the column or respectively the line corresponding to the depressed key of the keyboard.

2. A process according to Claim 1, characterised in that stage d) consists of setting two outputs of the first register (160) of the interface (16) and seeing whether one of the corresponding outputs of the second register (162) is at "1".

3. A scrambling process according to one of the preceding claims, characterised in that it is used to protect the information constituted by a code number entered on the keyboard (82) in a bank card reading terminal.

4. A circuit (3) for implementing the process according to one of the preceding claims, characterised in that it comprises a circuit for a parallel input/output interface (16) with two registers each comprising as many bits as the keyboard has columns and lines, the first register of which (160) positioned as an output with each of its outputs connected to an inverter (164), the output of which is connected on the one hand through a resistor (166) to a supply voltage and on the other hand to the inputs with significance corresponding to the second register (162) of the input/output interface positioned as an input, all the rows and columns of the keyboard (82) each being connected to an input of the second register and an output of the first register, a microprocessor (11) connected by a bus (110) to the interface circuit (16) and a memory (13) containing the program for managing and controlling the interface (16) by the processor (11).

5. A circuit according to Claim 4, characterised in that it is used to protect the information constituted by a multi-digit number entered on the keyboard in the reading terminal for a microcircuit card, the reading terminal comprising means for physically protecting the electronic circuits and the information contained in these electronic circuits.

6. A circuit according to Claim 5, characterised in that the physical protection means are constituted by a resistor network (21, 22) embedded in resin (3) and further comprising means (104) for detecting modifications in the resistance of the network and means (101, 102) for detecting variations in the temperature of the resin.

## Patentansprüche

1. Verfahren zur Störung der Tastenerkennung einer uncodierten Tastatur (82) durch die Abfragetechnik, dadurch gekennzeichnet, daß es darin besteht:
a) daß sämtliche Reihen und Spalten der Tastatur ausgangsseitig mit einem ersten Register (160) einer parallelen Ein-Ausgabeschnittstelle (16) verbunden sind, wobei diese Verbindung für jeden Ausgang des Registers über einen Inverter (164) führt, dessen Ausgang einerseits über einen Widerstand (166) mit einer Versorgungsspannung und andererseits mit den Eingängen mit entsprechender Wertigkeit eines eingangsseitig angeordneten zweiten Registers (162) der Schnittstelle verbunden ist;
b) daß mit den Eingängen des zweiten Registers (162) der Ein-Ausgabeschnittstelle sämtliche Reihen und Spalten der Tastatur verbunden sind;
c) daß die Reihenfolge, in der die Ausgänge abgefragt werden, auf zufällige Weise ausgelost wird;
d) daß wenigstens einer der Ausgänge auf "1" gesetzt wird und daß festgestellt wird. ob einer der entsprechenden Eingänge auf "1" liegt;
e) daß im entgegengesetzten Fall jede der verbleibenden Zeilen eine nach der anderen abgefragt wird, indem sie auf "1" gesetzt wird, bis sich der zugehörige Eingang auf dem Wert "1" befindet, was anzeigt, daß die Zeile oder die Spalte gefunden worden ist;
f) daß die Stufen d) und e) wiederholt werden, um die Spalte bzw. die Zeile, die der gedrückten Taste der Tastatur entspricht, zu bestimmen.

2. Verfahren gemäß Anspruch 1, dadurch gekennzeichnet, daß die Stufe d) darin besteht, daß zwei Ausgänge des ersten Registers (160) der Schnittstelle (16) gesetzt werden und daß festgestellt wird, ob einer der entsprechenden Eingänge des zweiten Registers (162) auf "1" liegt.

3. Störungsverfahren gemäß einem der vorangehenden Ansprüche, dadurch gekennzeichnet, daß es zum Schutz der Information verwendet wird, die durch eine Codenummer gebildet ist, die durch die Tastatur (82) in ein Leseendgerät für eine Bankkarte eingegeben wird.

4. Schaltung (3) zur Ausführung des Verfahrens gemäß einem der vorangehenden Ansprüche, dadurch gekennzeichnet, daß die versehen ist mit einer parallelen Ein-Ausgabeschnittstellenschaltung (16) mit zwei Registern, die jeweils soviele Bits enthalten wie die Tastatur Spalten und Zeilen besitzt, wovon das erste Register (160) ausgangsseitig angeordnet ist, wobei jeder seiner Ausgänge mit einem Inverter (164) verbunden ist, dessen Ausgang einerseits über einen Widerstand (166) mit einer Versorgungsspannung und andererseits mit den Eingängen mit entsprechender Wertigkeit des eingangsseitig angeordneten zweiten Registers (162) der Ein-Ausgabeschnittstelle verbunden ist, wobei sämtliche Reihen und Spalten der Tastatur (82) jeweils mit einem Eingang des zweiten Registers und mit einem Ausgang des ersten Registers verbunden sind, einem Mikroprozessor (11), der über einen Bus (110) mit der Schnittstellenschaltung (16) verbunden ist, und einem Speicher (13), der das Programm für die Verwaltung und die Steuerung der Schnittstelle (16) durch den Prozessor (11) enthält.

5. Schaltung gemäß Anspruch 4, dadurch gekennzeichnet, daß sie zum Schutz der Information verwendet wird, die durch eine Nummer aus mehreren Ziffern gebildet ist, die durch die Tastatur in das Leseendgerät für eine Mikroschaltungskarte eingegeben wird, wobei das Leseendgerät Mittel zum physikalischen Schutz der elektronischen Schaltungen und der von diesen elektronischen Schaltungen gehaltenen Information enthält.

6. Schaltung gemäß Anspruch 5, dadurch gekennzeichnet, daß die Mittel zum physikalischen Schutz von einem in ein Harz (3) eingelassenen Widerstandsnetz (21, 22) gebildet sind und außerdem Mittel (104) zur Erfassung der Veränderungen des Widerstandes des Netzes und Mittel (101, 102) zur Erfassung der Temperaturshwankungen des Harzes umfassen.
